# EUROPÄISCHE PATENTSCHRIFT

(11) **EP 1 328 777 B1**
(45) Veröffentlichungstag und Bekanntmachung des Hinweises auf die Patenterteilung: **07.11.2012**
(21) Anmeldenummer: 01988849.4
(22) Anmeldetag: 28.09.2001
(51) Int. Cl.: G01F 1/58, G01F 25/00

(54) **VERFAHREN UND VORRICHTUNG ZUR SYSTEM- UND PROZESSÜBERWACHUNG BEI EINEM MAGNETISCH-INDUKTIVEN SENSOR**
DEVICE AND METHOD FOR SYSTEM AND PROCESS SUPERVISION IN A MAGNETO-INDUCTIVE SENSOR
PROCEDE ET DISPOSITIF PERMETTANT LA SURVEILLANCE DE SYSTEME ET DE PROCESSUS DANS UN DETECTEUR A INDUCTION MAGNETIQUE

(30) Priorität: 24.10.2000 EP 00123048
(43) Veröffentlichungstag der Anmeldung: 23.07.2003
(73) Patentinhaber: Endress + Hauser Flowtec AG, 4153 Reinach BL 1 (CH)
(72) Erfinder: BUDMIGER, Thomas, CH-4107 Ettingen (CH)
(74) Vertreter: Andres, Angelika Maria
(86) Internationale Anmeldenummer: PCT/EP2001/011234
(87) Internationale Veröffentlichungsnummer: WO 2002/035186

(56) Entgegenhaltungen:
- GB-A- 2 348 011
- GB-A- 2 348 964

## Beschreibung

Die Erfindung bezieht sich auf ein Verfahren und eine Vorrichtung zur System- und Prozeßüberwachung bei einem magnetisch-induktiven Sensor, wobei ein Meßrohr von einem Medium im wesentlichen in Richtung der Meßrohrachse durchflossen wird, wobei ein Magnetfeld das Meßrohr im wesentlichen senkrecht zur Meßrohrachse durchsetzt, wobei in zumindest eine im wesentlichen senkrecht zur Meßrohrachse angeordneten Meßelektrode eine Meßspannung induziert wird und wobei die induzierte Meßspannung bzw. die Meßdaten Information über den Volumenstrom des Mediums in dem Meßrohr liefert bzw. liefern.

Aus der EP 0 814 324 B1 ist bereits eine Meßverstärkeranordnung für einen magnetisch-induktiven Durchflußmesser bekannt geworden. Um eine zuverlässige Aufbereitung der Meßelektrodensignale auch bei feststoff-belandenen, insbesondere einen hohen Feststoffanteil enthaltenden Fluiden, möglich zu machen, wobei auf eine Erhöhung des Spulenstroms verzichtet werden soll, wird in dieser Patentschrift folgende erfinderische Ausgestaltung vorgeschlagen: Jeder Meßelektrode ist eine Meßverstärkeranordung zuge-ordnet. Diese umfaßt einen eingangsseitig mit der Meßelektrode verbundenen Vorverstärker und einen dem Vorverstärker direkt nachgeschalteten A/D Wandler. Weiterhin ist ein Taktgenerator vorgesehen, der die A/D Wandler mit einem Abtastsignal speist, wobei die Taktfrequenz des Taktgenerators größer als ca. 1 kHz ist. Den A/D Wandlern ist ein Subtrahierer nachgeschaltet. Wie bereits gesagt, werden die ermittelten Meßelektrodensignale im Stand der Technik ausschließlich zur exakten Bestimmung des Volumenstroms in dem Meßrohr verwendet.

GB2348011 offenbart einen magnetisch-induktiever Durchflussmesser. In GB2348011 wird beschrieben daß nach einem Wechsel des Magnetfeldes zumindenst ein Parameter der Stromanstiegskurve, die den in der Spule fließenden Strom repräsentiert, bestimmt und mit einem vorgegebene Referenzwert verglichen wird. Dabei wird die Zeit aufgezeichnet und mit vorgegebenen Zeit-Sollwerten verglichen.

Der Erfindung liegt die Aufgabe zugrunde, ein Verfahren und eine Vorrichtung vorzuschlagen, die zusätzlich zur Bestimmung des Volumenstroms eine Erkennung der Änderung einer System- und/oder einer Prozeßgröße erlauben.

Bezüglich des Verfahrens wird die Aufgabe dadurch gelöst, daß die Ist-Meßdaten über einen vorgegebenen Zeitraum bestimmt und ggf. gespeichert werden, daß die Ist-Meßdaten mit entsprechenden vorgegebenen Soll-Meßdaten verglichen werden und daß eine Meldung ausgegeben wird, wenn eine Abweichung zwischen den Ist-Meßdaten und den Soll-Meßdaten auftritt. Die Ausgabe der Meldung kann akustisch und/oder optisch erfolgen.

Kurz gesagt, werden erfindungsgemäß die Spannungswerte an den Meßelektroden kontinuierlich oder intermittierend beobachtet. Hierdurch wird es möglich, frühzeitig eine verläßliche Aussage hinsichtlich einer Änderung einer System- und/oder Prozeßgröße zu machen. Sobald eine Änderung einer System-oder Prozeßgröße erkannt ist, kann ein hieraus resultierender Fehler bei der Volumenbestimmung des durch das Meßrohr fließenden Meßmediums effektiv eliminiert werden. Ebenso wird es möglich, einen Defekt an einer System- oder Prozeßkomponente zu erkennen und die defekte Komponente möglichst umgehend auszutauschen.

Gemäß einer vorteilhaften Weiterbildung des erfindungsgemäßen Verfahrens wird vorgeschlagen, daß eine Meldung an das Bedienpersonal nur dann ausgegeben wird, wenn die Ist-Meßdaten außerhalb vorgegebener Toleranzen um die Soll-Meßdaten liegen.

Eine bevorzugte Ausgestaltung des erfindungsgemäßen Verfahrens sieht vor, daß das Frequenzspektrum U(f) der in die Meßelektrode induzierten Spannungswerte für die System- und oder Prozeßüberwachung herangezogen wird. Hier wird also ganz allgemein eine Änderung des für ein System und/oder einen Prozeß charakteristischen Frequenzspektrums als Indiz dafür genommen, daß an einer System- bzw. Prozeßgröße eine unerwünschte Änderung eingetreten ist.

Alternativ ist vorgesehen, daß zumindest ein zuvor bestimmtes markantes Muster innerhalb des Frequenzspektrums, beispielsweise ein zu einem gegebenen Zeitpunkt bzw. bei einer gegebenen Frequenz auftretender Peak, für die System-und oder Prozeßüberwachung herangezogen wird. Beispielsweise kann der Peak von einer Zahnradpumpe herrühren. Ändert sich die Lage oder die Amplitude dieses Peaks, so ist dies ein klares Anzeichen für eine Änderung der herrschenden System- und/oder Prozeß-bedingungen. Werden die Soll-Meßdaten darüber hinaus unter unterschied-lichen Bedingungen ermittelt, so läßt sich aus der Änderung auch ein Rückschluß darauf ziehen, welche der System- und/oder Prozeßgrößen sich geändert hat.

Bezüglich der erfindungsgemäßen Vorrichtung wird die Aufgabe dadurch gelöst, daß eine Auswerte-/Regeleinheit Ist-Meßdaten über einen vorgegebenen Zeitraum bestimmt und speichert, daß die Auswerte-/Regeleinheit die Ist-Meßdaten mit vorgegebenen Soll-Meßdaten vergleicht und daß die Auswerte-/Regeleinheit die Ausgabe einer Meldung veranlaßt, wenn eine Abweichung zwischen den Ist-Meßdaten und den Soll-Meßdaten auftritt.

Die Erfindung wird anhand der nachfolgenden Zeichnungen näher erläutert. Es zeigt:
- Fig. 1:: eine schematische Darstellung der erfindungsgemäßen Vorrichtung,
- Fig. 2:: eine Darstellung eines ersten Frequenzspektrums U(f) und
- Fig. 3:: eine Darstellung eines zweiten Frequenzspektrums U(f).

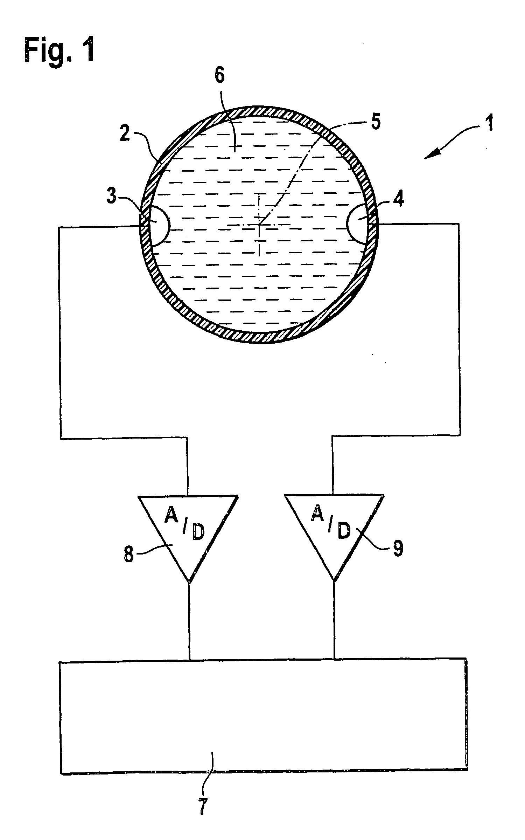

Fig. 1 zeigt eine schematische Darstellung einer Ausgestaltung der erfindungsgemäßen Vorrichtung 1. Das Meßrohr 2 des Sensors wird von dem Meßmedium 6 in Richtung der Meßrohrachse 5 durchflossen. Das Meßmedium 6 ist zumindest in geringem Umfang elektrisch leitfähig. Das Meßrohr 2 selbst ist aus einem nicht leitfähigen Material gefertigt, oder es ist zumindest an seiner Innenseite mit einem nicht leitfähigen Material ausgekleidet.

Infolge eines senkrecht zur Flußrichtung des Meßmediums 6 ausgerichteten Magnetfeldes, das von zwei in Fig. 1 nicht gesondert dargestellten, diametral angeordneten Elektromagneten erzeugt wird, wandern in dem Meßmedium 6 befindliche Ladungsträger zu der entgegengesetzt gepolten Meßelektrode 3, 4 ab. Die sich zwischen den beiden Meßelektroden 3, 4 aufbauende Spannung U ist proportional zu der über den Querschnitt des Meßrohres 2 gemittelten Strömungsgeschwindigkeit des Meßmediums 6, d. h. sie ist ein Maß für den Volumenstrom des Meßmediums 6 im Meßrohr 2. Das Meßrohr 2 ist übrigens über Verbindungselemente, die in der Zeichnung nicht gesondert dargestellt sind, mit einem Rohrsystem, durch das das Meßmedium 6 hindurchströmt, verbunden.

Im gezeigten Fall befinden sich die beiden Meßelektroden 3, 4 in direktem Kontakt mit dem Meßmedium 6; allerdings kann die Ankopplung auch kapazitiv erfolgen. Die Spannungswerte U, die an den Meßelektroden 3, 4 bevorzugt kontinuierlich ermittelt werden, werden in den A/D Wandlern 8, 9 digitalisiert. Die digitalen Werte werden zwecks Auswertung an die Auswerte-/Regeleinheit 7 weitergeleitet. Bevorzugt berechnet die Auswerte-/Regel-einheit 7 aus den Spannungswerten das Frequenzspektrum. Entweder ermittelt die Auswerte-/Regeleinheit 7 auf System- und/oder Prozeßgrößen zurückgehende Änderungen anhand einer Langzeitstudie des Frequenz-spektrums, oder sie greift sich markante Peaks aus dem Frequenzspektrum heraus und gibt eine Fehlermeldung auf, sobald Lage- und/oder Amplituden-änderungen vorgegebene Toleranzwerte überschreiten.

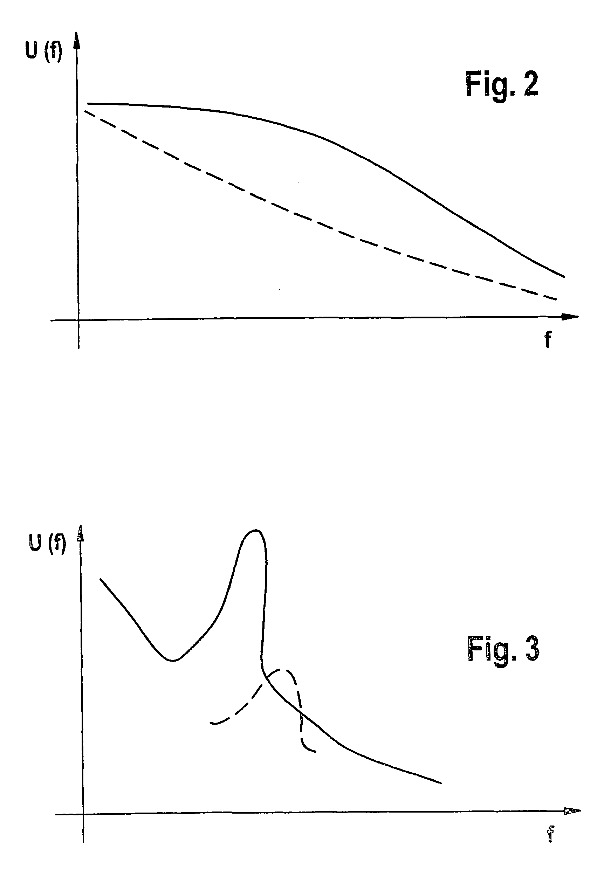

Fig. 2 zeigt eine Darstellung eines ersten Frequenzspektrums U(f). Die durchgezogene Kennlinie charakterisiert den Soll-Zustand, der zu Beginn der Messungen bzw. der Auswertungen bestimmt worden ist. Die gestrichelte Linie kennzeichnet den Ist-Zustand; sie gibt das Frequenzspektrum wieder, das sich aktuell nach einer Änderung einer System- und/oder Prozeßgröße eingestellt hat. Infolge der gravierenden Abweichungen zwischen den Ist- und den Soll-Meßdaten wird eine Meldung ausgegeben, die dem Bedienpersonal den aufgetretenen Fehler zur Kenntnis bringt.

Das in Fig. 3 dargestellte zweite Frequenzspektrum unterscheidet sich von dem ersten Frequenzspektrum in Fig. 2 durch das Auftreten eines markanten Peaks definierter Amplitude und definierter Lage. Wiederum kennzeichnet die durchgezogene Kennlinie den Soll-Zustand, während die gestrichelte Linie den Ist-Zustand darstellt. Ändert sich die Lage und/oder die Amplitude des Peaks während des laufenden Prozesses derart, daß entsprechend vorge-gebene Toleranzwerte überschritten werden, so wird eine Fehlermeldung ausgegeben. Während im ersten Fall also eine Änderung in der Charakteristik des gesamten Frequenzspektrums zur System- und/oder Prozeßüber-wachung herangezogen wird, wird gemäß der zweiten Variante zumindest ein markanter Bereich des Frequenzspektrums herausgegriffen und auf Änderungen hin überwacht.

### Bezugszeichenliste

- 1: erfindungsgemäße Vorrichtung
- 2: Meßrohr
- 3: Meßelektrode
- 4: Meßelektrode
- 5: Meßrohrachse
- 6: Meßmedium
- 7: Auswerte-/Regeleinheit
- 8: A/D Wandler
- 9: A/D Wandler

## Patentansprüche

1. Verfahren zur System- und Prozeßüberwachung bei einem magnetisch-induktiven Sensor, wobei ein Meßrohr (2) von einem Meßmedium (6) im wesentlichen in Richtung der Meßrohrachse (5) durchflossen wird, wobei ein Magnetfeld das Meßrohr (2) im wesentlichen senkrecht zur Meßrohrachse (5) durchsetzt, wobei in zumindest eine im wesentlichen senkrecht zur Meßrohrachse (5) angeordneten Meßelektrode (3; 4) eine Meßspannung induziert wird und wobei die induzierte Meßspannung bzw. die der induzierten Meßspannung entsprechenden digitalisierten Werte Information über den Volumenstrom des Meßmediums (6) in dem Meßrohr (2) liefert bzw. liefern, **dadurch gekennzeichnet,**
**daß** die induzierte Meßspannung bzw. die der induzierten Meßspannung entsprechenden digitalisierten Werte über einen vorgegebenen Zeitraum als Ist-Meßdaten bestimmt und gespeichert werden,
**daß** diese Ist-Meßdaten mit vorgegebenen Soll-Meßdaten verglichen werden und
**daß** eine Meldung ausgegeben Wird, wenn eine Abweichung zwischen den Ist-meßdaten und den Soll-Meßdaten auftritt.

2. Verfahren nach Anspruch 1,
**dadurch gekennzeichnet,**
**daß** die Meldung nur dann ausgegeben wird, wenn die Ist-Meßdafien außerhalb vorgegebener Toleranzen um die Soll-Meßdaten liegen,

3. Verfahren nach Anspruch 1 oder 2,
**dadurch gekennzeichnet,**
**daß** das Frequenzspektrum (U(f)) der in die Meßelektrode (3; 4) induzierten Meßspannungen gebildet wird und für die System- und/oder Prozeßüberwachung herangezogen wird.

4. Verfahren nach Anspruch 1 oder 2,
**dadurch gekennzeichnet,**
**daß** ein zuvor bestimmtes markantes Muster der in die Meßelektrode induzierten Meßspannungen für die System- und/oder Prozeßüberwachung herangezogen wird.

5. Verfahren nach Anspruch 4,
**dadurch gekennzeichnet,**
**daß** als markantes Muster der in die Meßelektrode induzierten Meßspannungen ein zu einem gegebenen Zeipunkt bzw. bei einer gegebenen Frequenz auftretender Peak herangezogen wird.

6. Vorrichtung zur System- und Prozeßüberw8chung bei einem magnetisch-induktiven Sensor mit einem Meßrohr (2), einer Magn'Ötafiorcnung, zumindest einer Meßelektrode (3; 4) und einer Auswerte-/Regeleinheit (7), wobei das Meßrohr (2) von einem Meßmedium (6) in Richtung der Meßrohrachse (5) durchflossen wird, wobei die Magnetanordnung ein das Meßrohr (2) durchsetzendes und im wesentlichen quer zur Meßrohrachse (5) verlaufendes Magnetfeld erzeugt, wobei die zumindest eine Meßelektrode (3; 4) in einem seitlichen Bereich des Meßrohres (5) angeordnet ist und galvanisch oder kapazitiv mit dem Meßmedium (6) gekoppelt ist und wobei die Auswerte-/Regeleinheit (7) Information über den Volumenstrom des Meßmediums (6) in dem Meßrohr (2) liefern,
**dadurch gekennzeichnet,**
**daß** die Auswerte-/Regeleinheit (7) die in die zumindest eine Meßelektrode (3; 4) induzierten Meßspannungen bzw. die der induzierten Meßspannung entsprechenden digitalisierten Werte als Ist-Meßdaten über einen vorgegebenen Zeitraum bestimmt und speichert,
**daß** die Auswerte-/Regeleinheit (7) diese Ist-Meßdaten mit vorgegebenen Soll-Meßdaten vergleicht und
**daß** die Auswerte-/Regeleinheit (7) die Ausgabe einer Meldung veranlaßt, wenn eine Abweichung zwischen den Ist-Meßdaten und den Soll-Meßdaten auftritt.

## Claims

1. Process for system and process monitoring with an electromagnetic sensor, wherein a medium to be measured (6) flows through a measuring pipe (2) primarily in the direction of the measuring pipe axis (5), wherein a magnetic field penetrates the measuring pipe (2) primarily perpendicular to the measuring pipe axis (5), wherein a measuring voltage is induced in at least one measuring electrode (3; 4) which is primarily arranged perpendicular to the measuring pipe axis (5), and wherein the induced measuring voltage or the digitized values that correspond to the induced measuring voltage provide(s) information on the volume flow of the medium to be measured (6) in the measuring pipe (2),
**characterized in that**
- the induced measuring voltage or the digitized values that correspond to the induced measuring voltage is/are determined and saved as actual measured data over a predefined period of time,
- these actual measured data are compared to predefined target measured data and
- a message is output if the actual and target measured data deviate from one another.

2. Process as claimed in Claim 1,
**characterized in that**
the message is only output if the actual measured data are outside predefined tolerances around the target measured data.

3. Process as claimed in Claim 1 or 2,
**characterized in that**
the frequency spectrum (U(f)) of the measuring voltages induced in the measuring electrode (3; 4) is formed and is used for system and/or process monitoring.

4. Process as claimed in Claim 1 or 2,
**characterized in that**
a previously defined distinctive pattern of the measuring voltages induced in the measuring electrode is used for system and/or process monitoring.

5. Process as claimed in Claim 4,
**characterized in that**
a peak occurring at a specific time or at a specific frequency is used as the distinctive pattern of the measuring voltages induced in the measuring electrode.

6. Unit for system and process monitoring for an electromagnetic sensor with a measuring pipe (2), a magnet arrangement, at least one measuring electrode (3; 4) and an evaluation/control unit (7), wherein a medium to be measured (6) flows through the measuring pipe (2) in the direction of the measuring pipe axis (5), wherein the magnet arrangement generates a magnetic field which penetrates the measuring pipe (2) and is essentially perpendicular to the measuring pipe axis (5), wherein the one measuring electrode at least (3; 4) is arranged in a side area of the measuring pipe (5) and is galvanically or capacitively coupled to the medium to be measured (6), and wherein the evaluation/control unit (7) deliver information about the volume flow of the medium to be measured (6) in the measuring pipe (2),
**characterized in that**
over a predefined period of time the evaluation/control unit (7) determines and saves as the actual measured data the measuring voltages induced in the one measuring electrode (3; 4) at least, or the digitized values that correspond to the induced measuring voltage,
the evaluation/control unit (7) compares these actual measured data to predefined target measured data and
the evaluation/control unit (7) causes a message to be output if the actual measured data and the target measured data deviate from one another.

## Revendications

1. Procédé destiné à la surveillance du système et du process dans le cas d'un capteur magnéto-inductif, pour lequel un tube de mesure (2) est parcouru par un produit de mesure (6) pour l'essentiel en direction de l'axe du tube de mesure (5), le tube de mesure (2) étant soumis à un champ magnétique pour l'essentiel perpendiculaire à l'axe du tube de mesure (5), une tension de mesure étant induite dans au moins une électrode de mesure (3, 4) disposée pour l'essentiel perpendiculairement à l'axe du tube de mesure (5) et la tension de mesure induite ou les valeurs numérisées correspondant à la tension de mesure induite fournissant des informations sur le débit volumique du produit mesuré (6),
**caractérisé en ce**
**que** la tension de mesure induite ou les valeurs numérisées correspondant à la tension de mesure induite sont déterminées et enregistrées pendant une période de temps prédéfinie en tant que données de mesure réelles,
**que** ces données de mesure réelles sont comparées avec des données de mesure de consigne prédéfinie
et
**qu'**un message est émis lorsqu'un écart apparaît entre les données de mesure réelles et les données de mesure de consigne.

2. Procédé selon la revendication 1,
**caractérisé en ce**
**que** le message n'est émis que lorsque les données de mesure réelles se situent en dehors de tolérances prédéfinies autour des données de mesure de consigne.

3. Procédé selon la revendication 1 ou 2,
**caractérisé en ce**
**qu'**est formé le spectre de fréquence (U(f)) des tensions de mesure induites dans l'électrode de mesure (3, 4), auquel spectre a recours la surveillance du système et/ou du process.

4. Procédé selon la revendication 1 ou 2,
**caractérisé en ce**
**que** la surveillance du système et/ou du process a recours à un échantillon marquant, déterminé au préalable, des tensions de mesure induites dans l'électrode de mesure.

5. Procédé selon la revendication 4,
**caractérisé en ce**
**qu'**il est fait recours, en tant qu'échantillon marquant des tensions de mesure induites dans l'électrode de mesure, à une pointe apparaissant à un instant défini ou à une fréquence définie.

6. Dispositif destiné à la surveillance d'un système ou d'un process dans le cas d'un capteur magnéto-inductif avec un tube de mesure (2), un circuit magnétique, au moins une électrode de mesure (3, 4) et une unité d'exploitation / de régulation (7), le tube de mesure (2) étant parcouru par un produit mesuré (6) en direction de l'axe du tube de mesure (5), le circuit magnétique générant un champ magnétique, auquel est soumis le tube de mesure (2) et qui s'étend pour l'essentiel perpendiculairement à l'axe du tube de mesure (5), l'au moins une électrode de mesure (3, 4) étant disposée dans une zone latérale du tube de mesure (2) et couplée par voie galvanique ou capacitive avec le produit mesuré (6), et l'unité d'exploitation / de régulation (7) fournissant des informations sur le débit volumique du produit mesuré (6) dans le tube de mesure (2),
**caractérisé en ce**
**que** l'unité d'exploitation / de régulation (7) détermine et enregistre, pendant une période de temps prédéfinie, les tensions de mesure induites dans l'au moins une électrode de mesure (3, 4) ou les valeurs numérisées correspondant à la tension de mesure induite en tant que données de mesure réelles,
en ce que l'unité d'exploitation / de régulation (7) compare ces données de mesure réelles avec des données de mesure de consigne prédéfinies et
en ce que l'unité d'exploitation / de régulation (7) ordonne la sortie d'un message lorsqu'apparaît un écart entre les données de mesure réelles et les données de mesure de consigne.
